# EUROPEAN PATENT APPLICATION

(11) **EP 1 974 610 A2**
(43) Date of publication of application: **01.10.2008**
(21) Application number: 08153514.8
(22) Date of filing: 28.03.2008
(51) Int. Cl.: A21C 15/00

(54) **Device for manipulating oven-baked foodstuff products, such as rusks and the like**

(30) Priority: 29.03.2007 IT TO20070227
(71) Applicant: Pre.Mec.S.r.l., 10126 Torino (IT)
(72) Inventor: GASPARDINO, Franco, 10086, Rivarolo Canavese (Torino) (IT)
(74) Representative: Buzzi, Franco

(57) **Abstract**

A device for manipulating rusks (F) arranged horizontally in parallel rows (A) on a conveying surface (P) at output from an oven, including a pick-up assembly (1) with suction cups (8) for picking up the rusks (F) of each row (A) and depositing them in a horizontal condition at least in twos set on top of one another on a depositing station (2) associated to which is an evacuation assembly (3) for transferring the rusks set on top of one another (F) to at least one packaging machine (C).

## Description

### Field of the invention

The present invention relates in general to packaging of oven-baked products, and more in particular regards a device for manipulating rusks and the like at output from the toasting oven and their transfer to at least one packaging machine.

### State of the prior art

In industrial production plants, the rusks at output from the oven are normally arranged in a horizontal condition, set alongside one another in parallel rows on a conveying surface, which moves continuously in a direction perpendicular to said rows.

Traditionally, the rows of rusks are unloaded from the mobile surface of the oven in a direction transverse to the one of conveying of the mobile surface, alongside the latter. The rusks are positioned on edge, i.e., set substantially vertically up against one another, and are then transferred to the packaging machine or machines for being packaged in said condition.

This entails various drawbacks. In the first place, the system of unloading and positioning of the rusks set on edge entails considerable lateral encumbrance of the plant for the production of rusks, which add to the already considerable longitudinal encumbrance. In the second place, in view of their irregular, brittle and markedly abrasive nature, the rusks positioned standing on their edges are subject to surface crumbling, with consequent generation of detritus in the form of powder that needs to be frequently cleared away, with risks of damage to the rusks themselves. In the third place, the fact that the rusks are set on edge can lead to imprecision of positioning, which must necessarily be corrected prior to packaging, a fact that entails frequent manual interventions.

### Summary of the invention

The object of the present invention is to overcome the aforesaid drawbacks, and in particular to provide a device for manipulating rusks of the type defined at the outset, which will enable unloading of the rusks at output from the oven not set on edge, but in a horizontal position stacked in successive columns, possibly also set alongside one another.

A further object of the invention is to provide a device for manipulation of rusks of the type defined above that will be able to stack the rusks horizontally directly along the line, i.e., at output from the oven instead of alongside it, and without this producing any rubbing between the surfaces of the rusks that are each time set on top of one another.

According to the invention, the above objects are achieved thanks to the fact that the device includes:
- a pick-up assembly with suction cups situated transversely over the conveying surface of the oven, said suction cups being displaceable for picking up the rusks of each row in succession in synchronism with the movement of the conveying surface in said direction of advance and for releasing said rusks selectively, said pick-up assembly being translatable with an alternating motion in a direction that is parallel and a direction that is transverse with respect to said direction of advance;
- a depositing station, which is situated parallel to and behind the pick-up assembly, with respect to said direction of advance, and is arranged for receiving in succession from said suction cups of the pick-up assembly a first series of rusks, arranged horizontally, and at least one second series of rusks, set on top of the rusks of the first series;
- positioning means for arranging the rusks set on top of one another according to a pre-set pitch; and
- an evacuation assembly, associated to the depositing station, for transferring the rusks set on top of one another from said depositing station to said at least one packaging machine.

The positioning means can be operatively associated to said depositing station or else, more conveniently, to the pick-up assembly. In the first case, the rusks are arranged according to the pre-set pitch after they have been stacked, whilst in the second case this occurs prior to their being stacked. In both cases, said positioning means conveniently include a motor-driven pantograph system.

The depositing station can moreover include squaring means for evening up the rusks set on top of one another, and the pick-up assembly conveniently includes a motor-driven conveyor set parallel underneath a horizontal wall of the depositing station, which can be opened and re-closed in synchronism with the pick-up assembly and is designed for receiving the rusks set on top of one another following upon opening of said horizontal wall.

Thanks to the above arrangement, the rusks at output from the oven are set on top of one another in a horizontal condition directly on the line and sent on to the packaging machine or machines in columns of two or more rusks, thus preventing, during stacking, any sliding or rubbing between the rusks themselves that might cause crumbling of the surface thereof and even more serious damage. The step of stacking is performed, in fact, in a temporarily stationary condition of the underlying rusks, on which the overlying rusks are laid in a vertical direction.

The manipulation device according to the invention will moreover include an electronic control system, which is advantageously equipped with a visual system, typically a video-camera visual system, for discriminating the rusks that are to be picked up by the pick-up assembly from the ones that instead are to be discarded on account of defects, such as breakages, burnt areas, excessively irregular shapes or sizes, presence of holes, wrong positioning, etc.

### Brief description of the drawings

The invention will now be described in detail with reference to the annexed figures of drawing, which are provided by way of non-limiting example only, wherein:
- Figure 1 is a schematic partial top plan view of a plant for the production of rusks, equipped with a manipulation device according to a first embodiment of the invention;
- Figure 2 is a horizontal cross-sectional view, at an enlarged scale, according to the line II-II of Figure 1;
- Figure 3 is a simplified top plan view of the plant illustrated in Figure 2;
- Figures 4 and 5 show, at an enlarged scale, a detail of Figure 3 in two different operating conditions;
- Figure 6 is a cross-sectional view, at an enlarged scale, according to the line VI-VI of Figure 4;
- Figure 7 is a cross-sectional view, at an enlarged scale, according to the line VII-VII of Figure 5;
- Figure 8 is a view similar to that of Figure 2, rotated through 180°, which shows a variant manipulation device in accordance with a second embodiment of the invention, currently considered preferred;
- Figure 9 is a partial perspective view of the manipulation device according to the variant of Figure 8, where only the pick-up assembly is represented;
- Figure 10 is a front elevation according to the arrow X of Figure 8;
- Figure 11 shows, at an enlarged scale, a part of Figure 10;
- Figure 12 is a top plan view of a detail of Figure 11;
- Figure 13 is a top plan view according to the arrow XIII of Figure 10; and
- Figure 14 shows, at an enlarged scale, a detail of Figure 8.

### Detailed description of the invention

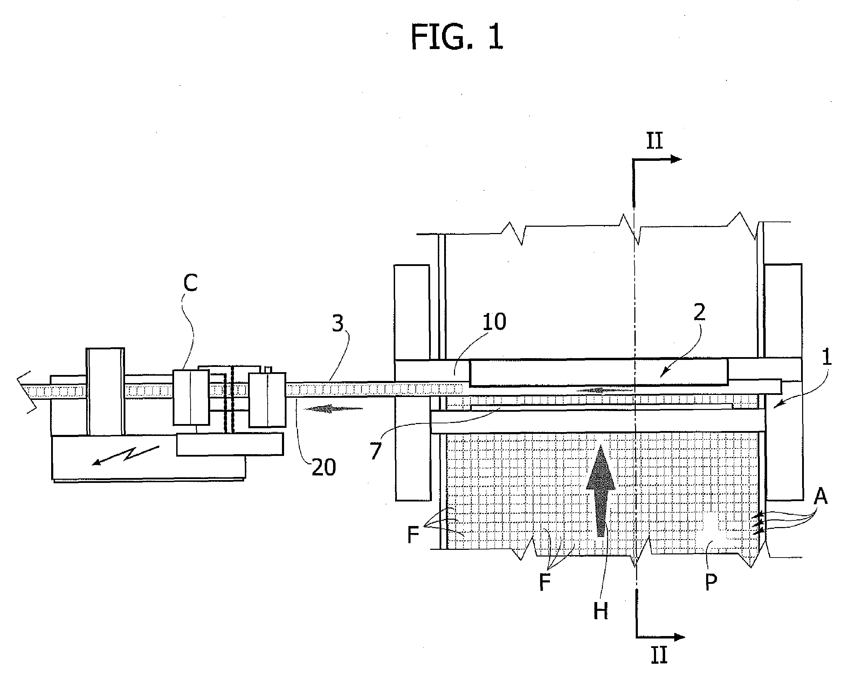

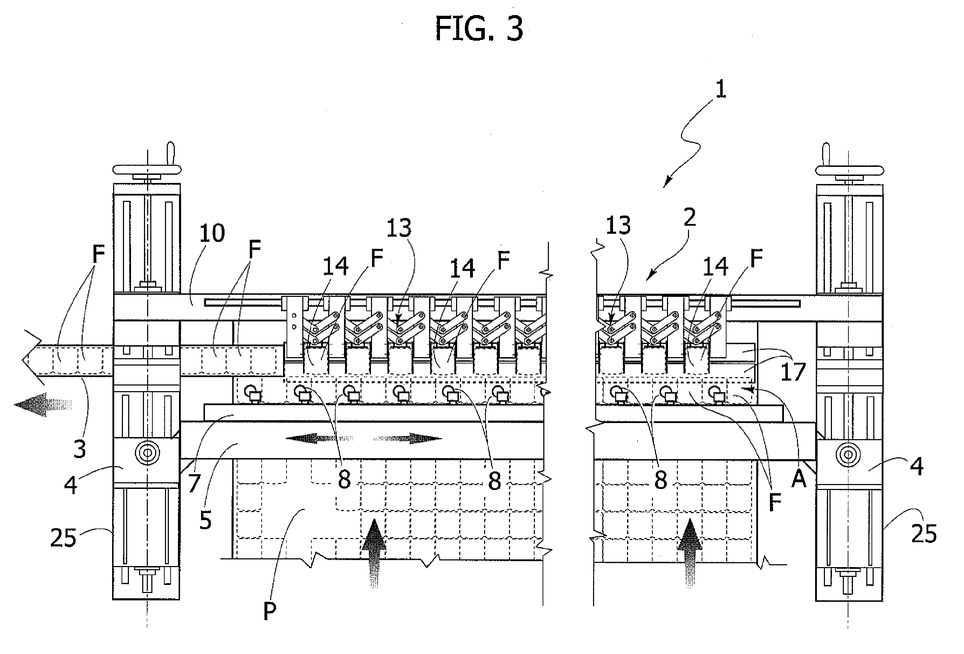

The first embodiment of the invention illustrated in Figures 1-7 will first of all be described.

With initial reference to Figures 1-3, designated by P is the terminal part of a mobile conveying surface, typically constituted by a motor-driven endless belt in the form of wire mesh, of an oven for toasting rusks. Said oven, which is in itself known and conventional, is not represented in the drawings for simplicity of illustration.

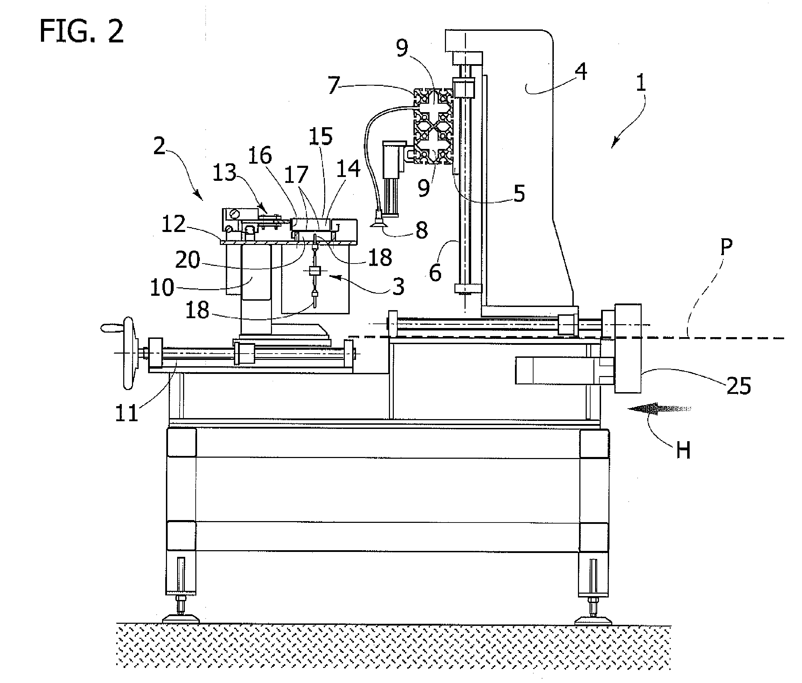

The conveying surface P is mobile continuously in the direction of advance indicated by H in Figures 1 and 2. The rusks F are arranged horizontally thereon in conditions where they are set alongside one another, in contiguous rows A perpendicular to the direction of displacement H.

For picking up the rusks F from the conveying surface P and transferring them to one or more packaging machines C arranged laterally, the invention envisages a manipulation device set directly on the line, in a position corresponding to the terminal part of the conveying surface P, and basically including a pick-up assembly 1 and a depositing station 2 with associated evacuation assembly 3, described in detail hereinafter.

The pick-up assembly 1 includes a portal structure 4 situated over the conveying surface P, set crosswise to this, and displaceable with reciprocating motion, via at least one motor-driven unit, designated as a whole by 25, in a direction parallel to the direction of advance H of the conveying surface P, in synchronism therewith.

The portal 4 supports a guide structure 5, displaceable vertically along guides 6 via a motor-driven unit (not illustrated), on which a cross-member 7 is mounted, parallel to the rows A of rusks F and in turn displaceable, via a motor-driven unit (not illustrated), along the guide structure 5 parallel thereto, i.e., set crosswise to the direction of advance H, with pre-set pitches corresponding to the pitch between the rusks F of each row A at output from the oven.

The cross-member 7 performs a dual function: that of support for a plurality of suction cups 8, which project in the direction of the conveying surface P and are set horizontally separated from one another by a distance equal to the pitch between the rusks F of each row A coming out of the oven; and that of suction manifold. For this purpose, the cross-member 7 is formed with one or more cavities 9 connected, on one side, to one or more sources of suction pressure (not illustrated) and, on the other, to the suction cups 8.

As will be seen in what follows, thanks to the reciprocating displacements of the portal 4 in the direction of conveying H, and of the cross-member 7 in a vertical direction and in a direction transverse to the direction of conveying H, the suction cups 8 are able each time to pick up each row A of rusks F at output from the oven on the conveying surface P, and to deposit on the depositing station 2 a first series of rusks, and then at least one second series of rusks, alternating with those of the first series, arranging them in a stacked condition. It is advantageously possible to select different modes of operation of the pick-up assembly 1 so as to deposit on the depositing station 2 the rusks F of each row in multiple stackings, for example even up to six.

The depositing station 2 also includes a supporting structure 10, which is set over the conveying surface P crosswise thereto and immediately behind the pick-up assembly 1, with respect to the direction H.

The supporting structure 10, the distance of which with respect to the pick-up assembly 1 can be regulated via a manual or motor-driven mechanism of advance/recession, designated as a whole by 11, carries a horizontal bracket 12, which in turn carries, on top, a motor-driven pantograph mechanism, designated as a whole by 13 and actuated in synchronism with the pick-up assembly 1, associated to which is a plurality of horizontal receptacles 14, set alongside one another. The pantograph mechanism 13 constitutes a positioner, which is designed to arrange, with a pre-set pitch from one another that depends upon the needs of the packaging machine C, the rusks F already deposited and stacked on top of one another on the depositing station 2.

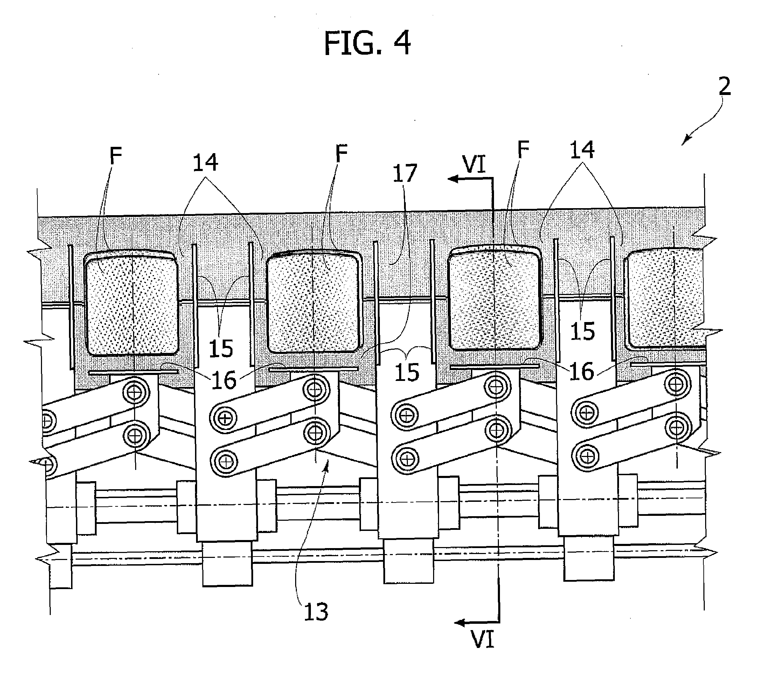

With reference now in greater detail to Figure 4, each receptacle 14 of the depositing station 2 is delimited laterally by a pair of mobile vertical side members 15, in front of a mobile vertical side member 16, and, at the bottom, by a horizontal bottom wall, which can be opened and re-closed 17, actuated by means of a motor-driven unit (not illustrated) in synchronism with the pantograph mechanism 13, with the modalities described more clearly in what follows.

The evacuation assembly 3 is constituted by a motor-driven endless-belt conveyor, set underneath the wall 17 of the depositing station 2 and parallel thereto, i.e., orthogonal to the direction H. The conveyor 3 bears a plurality of fingers 18, spaced apart from one another, which project through a slit 19 of the bracket 12 and are able to move within a guide channel 20, directed towards the packaging machine C.

Operation of the manipulation device presented above is described in what follows.

During continuous advance of the rows A of rusks F in the direction H, the combined movements synchronised with said advance of the portal structure 4 and of the cross-member 7 set the suction cups 8 each time in contact with the first row A of rusks F that are arriving on the conveying surface P.

The rusks F thus picked up are then transferred over the depositing station 2 by displacement of the pick-up assembly 1 set above it, and then deposited selectively, following upon interruption of the suction effect of the suction cups 8, within the receptacles 14, in a horizontal condition, i.e., set flat. In the case where the rusks F are to be packaged in twos set on top of one another, a first series is first deposited, with interruption of the suction pressure to the corresponding suction cups 8, and then, after transverse displacement of the cross-member 7 by an amount equal to the pitch between the rusks F of the row A, a second series is laid on top of the first. The stacking of the rusks of the second series on those of the first series is carried out in static conditions of the latter, i.e., without relative horizontal motion and hence without there being produced any rubbing between the respective surfaces of contact.

Obviously, it will be possible to deposit in succession more than two rusks F set on top of one another, for example from three up to six, or more.

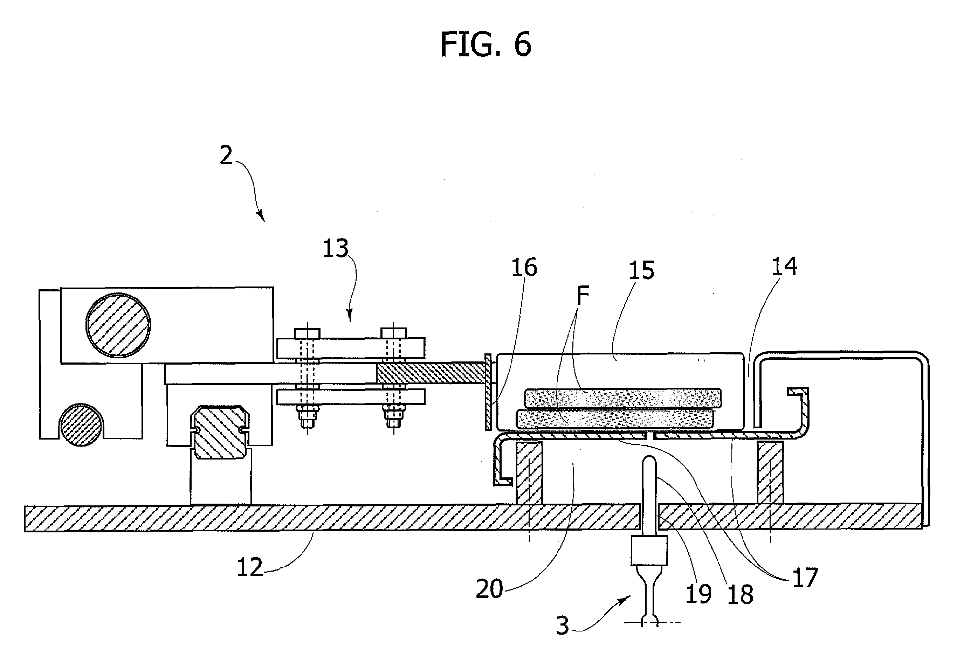

In this step, the mobile walls 15 and 16 of the receptacles 14 are held by the pantograph mechanism 13 in the position where they are, respectively, set at a distance from the rusks and set back with respect to the rusks, as illustrated in Figures 4 and 6, with the bottom wall 17 in a closed condition above the evacuation conveyor 3.

At the end of this step, each receptacle 14 thus contains two (or more) rusks F, arranged horizontally on top of one another, in such a way, however, that they are not precisely evened up, in the sense that they can, for example, be slightly staggered with respect to one another or oriented in a slightly different way, and in any case at a distance apart from one another that in general will not correspond to the pitch required by the packaging machine C.

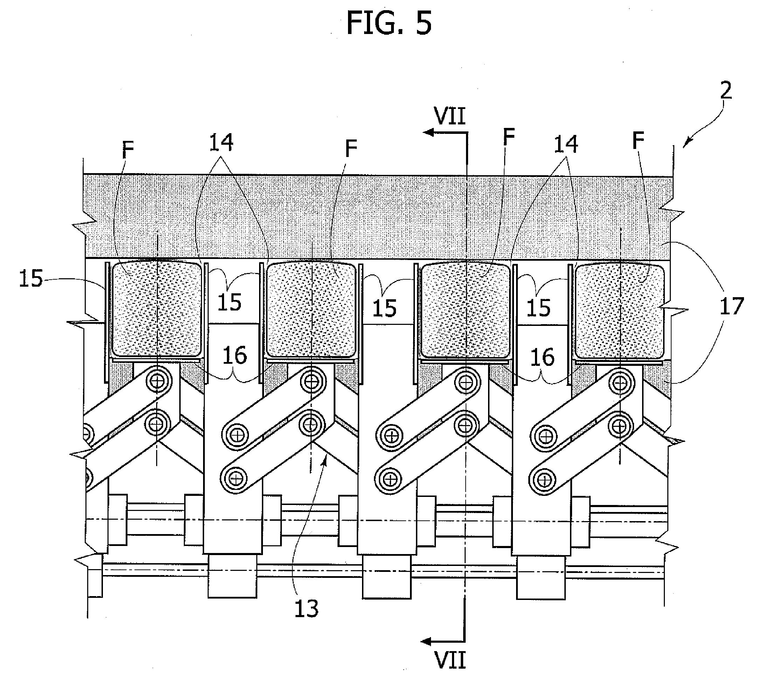

To obtain proper distancing between the pairs of rusks set on top of one another and the simultaneous evening up of the rusks of each pair, the pantograph mechanism 13 is then actuated, via which the vertical walls 15 of each pair are brought up to one another, whilst simultaneously the front walls 16 are made to advance, from the position represented in Figures 4 and 6 to the position illustrated in Figure 5.

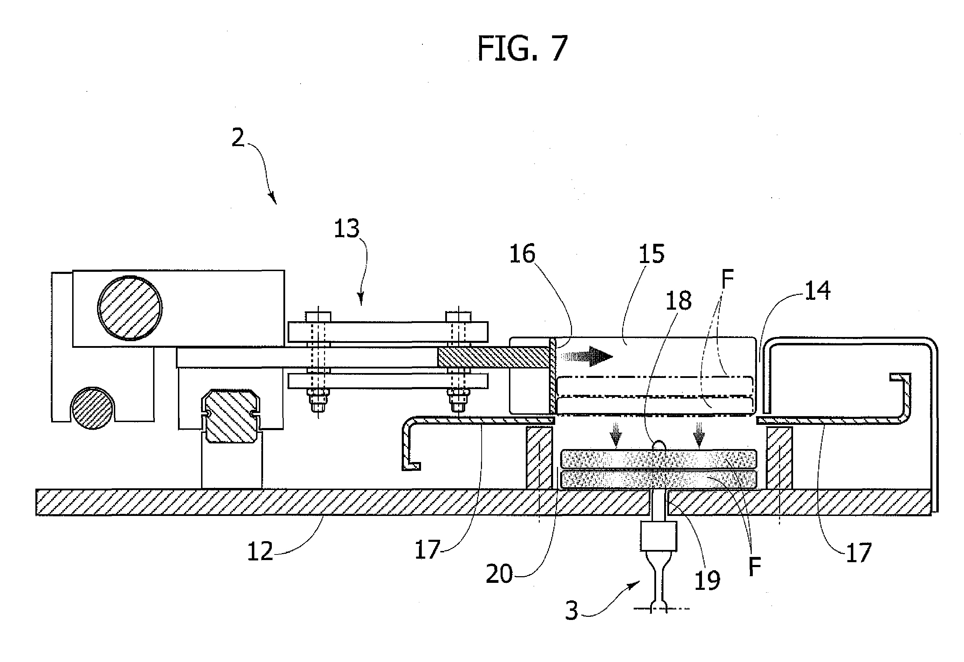

Immediately afterwards, a command is issued for opening the bottom wall 17, so that the rusks F set on top of one another and evened up descend from the position illustrated with a dashed line in Figure 7 to the one illustrated with a solid line in the same figure, within the guide channel 20. They are then picked up by the fingers 18 of the conveyor 3, and transferred to the packaging machine C for being packaged. According to the requirements, the packets may include a single pair or else two or more pairs (also set alongside one another) of rusks F set on top of one another.

The motor-driven actuators of the different components described above of the manipulation device according to the invention are governed by an electronic control unit (not represented) in a way synchronised with respect to one another and with the advance of the rusks F along the conveying surface P. Possibly operatively associated to such an electronic control unit is a system for visual checking, typically a video-camera visual system (not illustrated in so far as it is in itself generally known in similar applications) for discriminating the rusks F that are to be picked up by the pick-up assembly 1 for being sent on to the packaging machine or machines from the ones that instead are to be discarded (i.e., not picked up) on account of defects such as breakages, burnt areas, excessively irregular shapes or sizes, presence of holes, wrong positioning, etc.

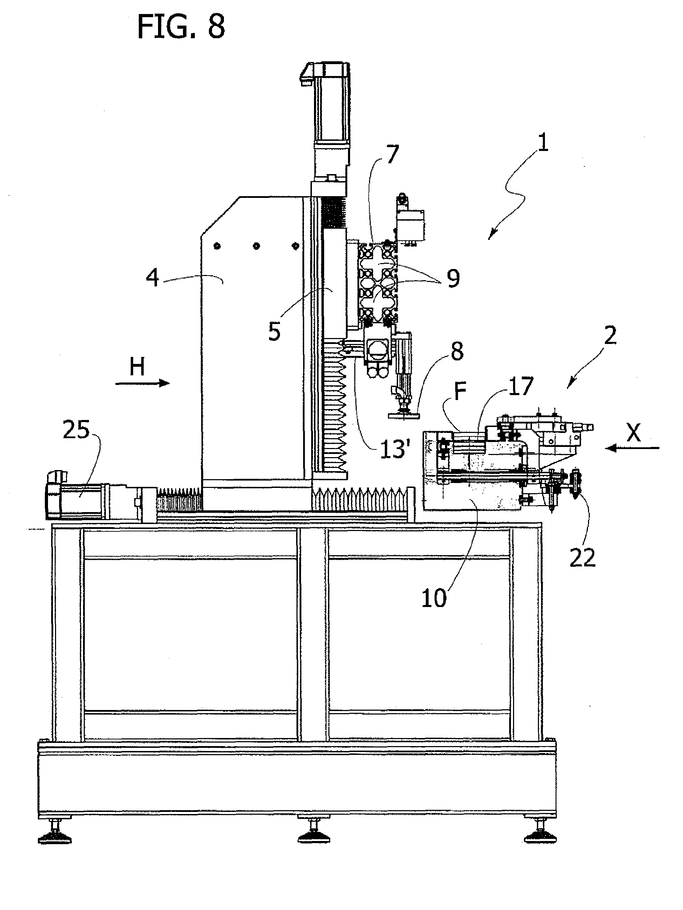

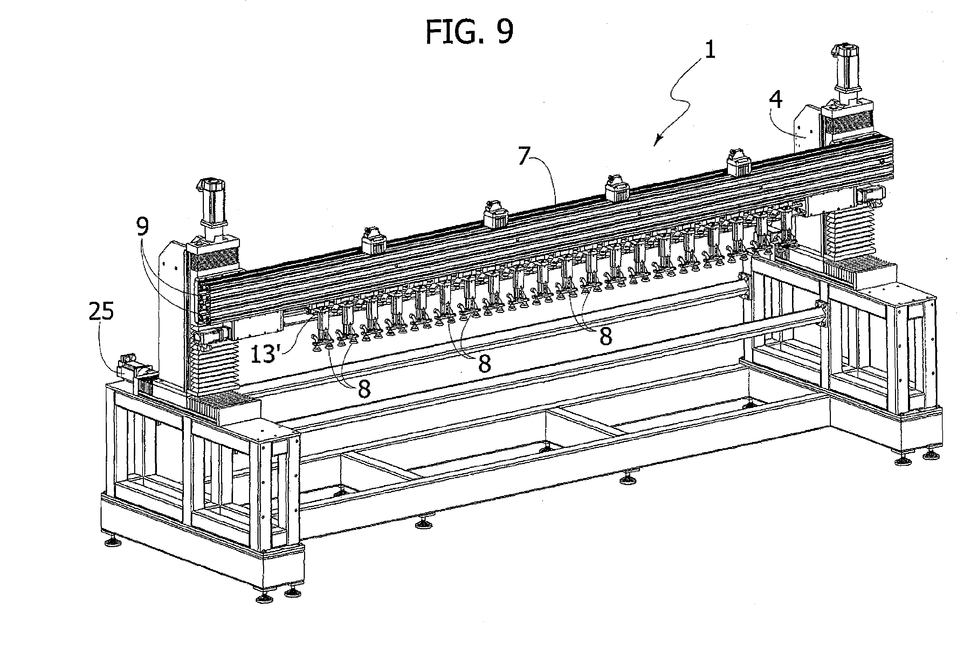

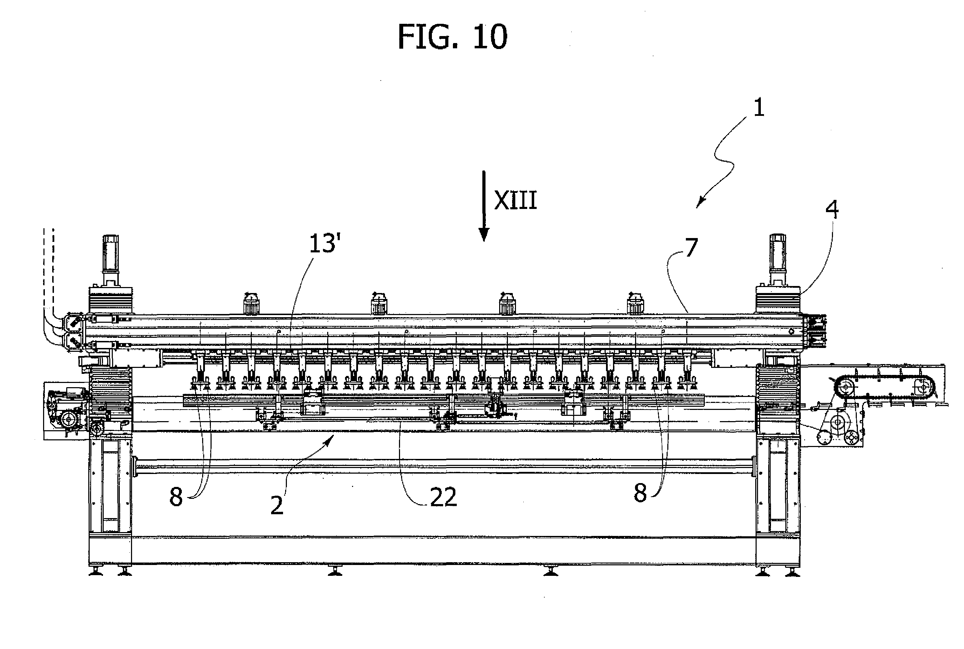

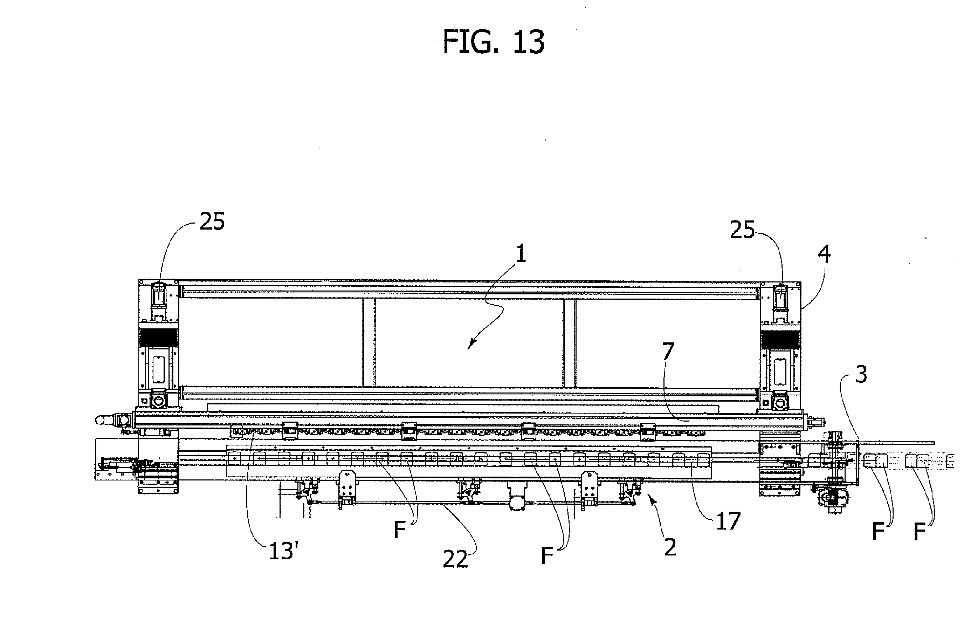

In the variant represented in Figures 8 to 14, where parts that are identical or similar to the ones already described previously are designated by the same reference numbers, the positioning system for arranging the rusks F at the pre-set pitch, as has been said, depending upon the needs of the packaging machine C, is associated - instead of to the depositing station 2 as in the preceding embodiment - directly to the pick-up device 1. In this way, the rusks F are already deposited and set on top of one another on the depositing station 2, set apart from one another by a pre-set distance.

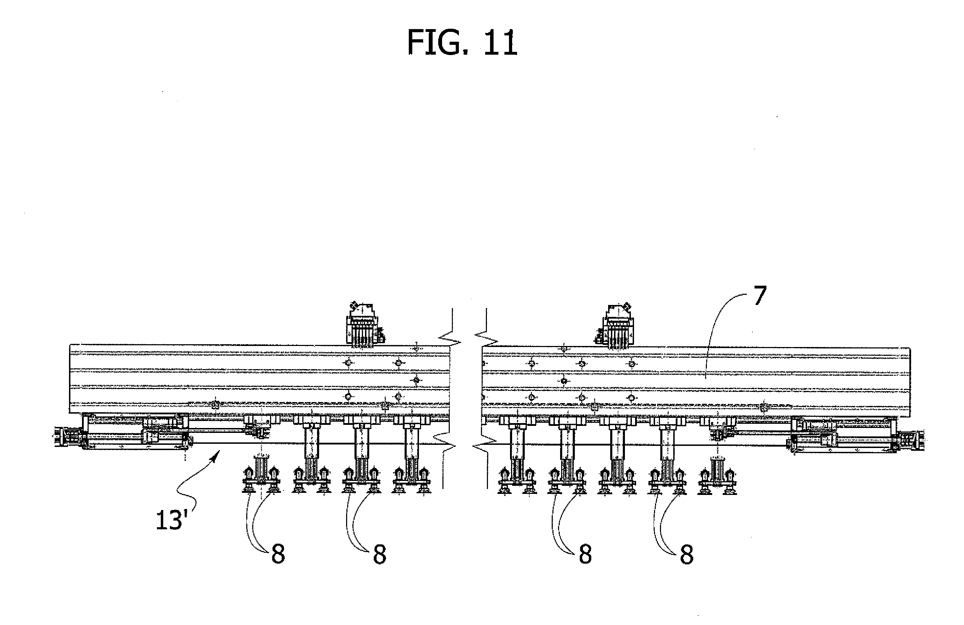

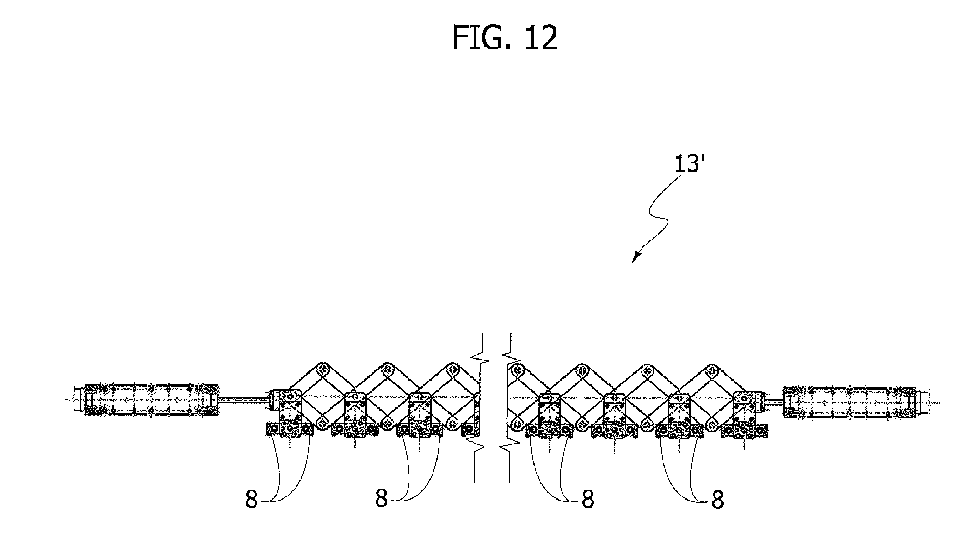

Said positioning system is also in this case constituted conveniently by a motor-driven pantograph 13', represented in detail in Figures 11 and 12, provided for moving the suction cups 8 simultaneously along the cross-member 7 from a position where they are set close to one another to enable the rusks F to be picked up from the conveying surface P to a position where they are set at a distance from one another for depositing of the rusks F on the openable wall 17 of the depositing station 2.

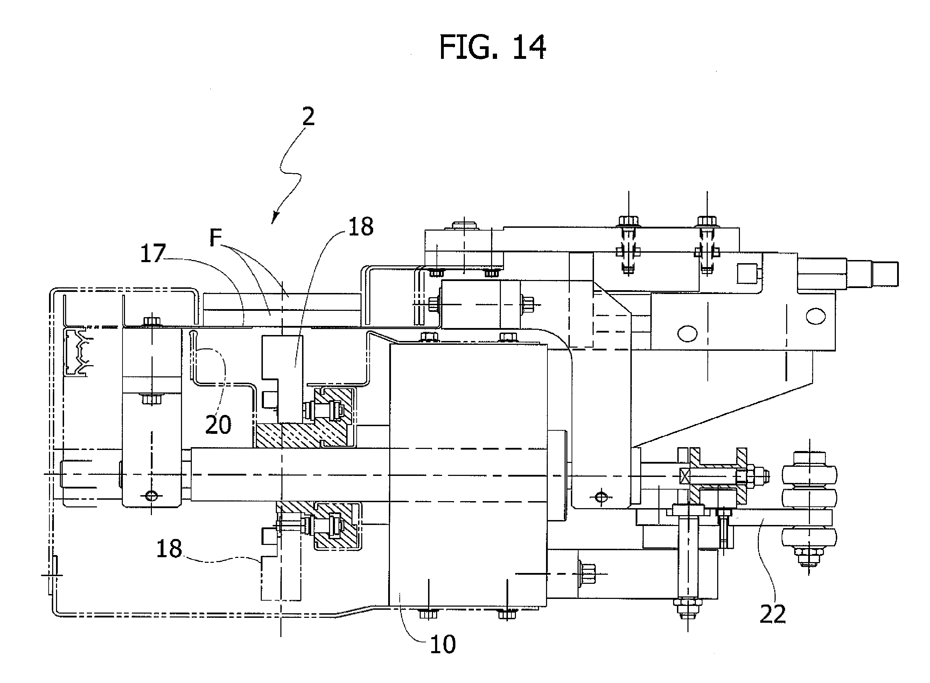

For control of opening and re-closing of the openable wall 17 of the depositing station 2 a motor-driven leverage 22 is provided, represented in greater detail in Figure 14.

Operation of the variant of the manipulation device according to the invention described here, which is currently considered preferred, is generally similar to what has already been described with reference to the preceding embodiment, with the sole difference that the step of distancing of the rusks F with the pitch required by the packaging machine C is performed immediately after their being picked up from the conveying surface P and immediately prior to their release on the depositing station 2. Consequently, the system for evening up the rusks F deposited on the openable wall 17 entails in this case only the displacement of the front wall 16 from the retracted position to the advanced position so as to bring the rusks set on top of one another up to a fixed contrast element for enabling alignment.

Also in this case, a visual checking system is provided, typically a video-camera visual system, connected to the electronic control unit of the device for discriminating the rusks F that are to be picked up by the pick-up assembly 1 to be sent on to the packaging machine or machines from the ones that instead must be discarded. The pick-up assembly is thus controlled so as to pick up only the groups of rusks suitable for packaging.

It will emerge clearly from the foregoing description that the manipulation device according to the invention enables prevention of positioning of the rusks F edge on (i.e., in a vertical position, where they are set alongside one another), with appreciable advantages in terms of safeguarding of their integrity, absence of any rubbing and hence of powdery residue, and also in terms of greater precision in prearrangement of the rusks for the subsequent packaging, with a consequent drastic reduction of manual interventions. To this there may also be added a reduction of lateral encumbrance at output from the oven as compared to conventional systems, which involve rotation of the rusks from the horizontal condition at output from the oven to the vertical condition, where they are set on edge for packaging.

Of course, the details of construction and the embodiments may vary widely with respect to what is described and illustrated herein, without thereby departing from the scope of the present invention, as defined in the ensuing claims.

Thus, for example, the positioning assembly described above, associated to the depositing station 2 or else directly to the pick-up device 1, may include a mechanism that is constructionally different from the pantograph mechanism described above, for example one of a cam type or some other functionally equivalent system.

## Claims

1. A device for manipulating oven-baked foodstuff products, such as rusks (F) and the like, at output from an oven and for sending them to at least one packaging machine (C), wherein the rusks (F) at output from the oven are arranged horizontally set alongside one another in parallel rows (A) on a conveying surface (P), which moves in a direction of advance (H) perpendicular to said rows (A), said device being **characterized in that** it includes:
- a pick-up assembly (1) with suction cups (8), situated set crosswise over the conveying surface (P) of the oven, said suction cups (8) being displaceable for picking up the rusks (F) of each row (A) in succession in synchronism with the movement of the conveying surface (P) in said direction of advance (H) and for releasing said rusks selectively (F), said pick-up assembly (1) being translatable with an alternating motion in a direction that is parallel and a direction that is transverse with respect to said direction of advance (H);
- a depositing station (2), which is situated parallel to and behind said pick-up assembly (1) with respect to said direction of advance (H) and is arranged for receiving in succession from said suction cups (8) of the pick-up assembly (1) one first series of rusks (F), arranged horizontally, and at least one second series of rusks (F), set on top of the rusks of the first series;
- positioning means (13, 13') for arranging said rusks set on top of one another (F) according to a pre-set pitch;
- an evacuation assembly (3) associated to said depositing station (2) for transferring the rusks set on top of one another (F) from said depositing station (2) to said at least one packaging machine (C).

2. The device according to Claim 1, **characterized in that** said positioning means (13) are operatively associated to said depositing station (2).

3. The device according to Claim 1, **characterized in that** said positioning means (13') are operatively associated to said pick-up assembly (1).

4. The device according to Claim 1 or Claim 2, **characterized in that** said depositing station (2) moreover includes squaring means (15, 16) for evening up the rusks set on top of one another (F).

5. The device according to Claim 1, **characterized in that** said pick-up assembly (1) includes a portal structure (4), which can be displaced parallel to said direction of advance (H) and bears a cross-member (7), which can be displaced transversely to said direction of advance (H) and functions as a support that can move vertically for said suction cups (8), as well as functioning as a suction manifold (9) for connecting said suction cups (8) to a negative-pressure source.

6. The device according to Claim 4, **characterized in that** said depositing station (2) defines a series of receptacles set alongside one another (14), each of which (2) is delimited by a front vertical wall (16), which can be displaced between a retracted position for receiving the rusks (F) and an advanced position for evening up said rusks (F) within said receptacles (14).

7. The device according to Claim 6, **characterized in that** said receptacles (14) are moreover delimited by a pair of vertical side walls (15), which can be displaced between a position where they are set at a distance apart from one another for receiving the rusks (F) and a position where they are set close to one another.

8. The device according to Claim 2 or Claim 3, **characterized in that** said positioning means include a motor-driven pantograph mechanism (13; 13').

9. The device according to Claim 1, **characterized in that** said depositing station (2) has at the bottom a horizontal wall (17), which can be opened and closed in synchronism with said pick-up assembly (1), and **in that** said evacuation assembly includes a motor-driven conveyor (3), set parallel underneath said horizontal wall (17) and designed for receiving said rusks set on top of one another (F) following upon opening of said horizontal wall (17).

10. The device according to one or more of the preceding claims, **characterized in that** it moreover includes video-camera visual-verification means for discriminating the rusks (F) suitable for being picked up by said pick-up assembly (1) from the ones that are to be discarded and for controlling accordingly said pick-up assembly (1) so as to pick up only the rusks suitable for packaging.
